# EUROPÄISCHE PATENTSCHRIFT

(11) **EP 0 739 448 B1**
(45) Veröffentlichungstag und Bekanntmachung des Hinweises auf die Patenterteilung: **13.01.1999**
(21) Anmeldenummer: 95934053.0
(22) Anmeldetag: 13.10.1995
(51) Int. Cl.: F02P 17/12, G01M 15/00

(54) **VERFAHREN ZUR FUNKTIONSÜBERWACHUNG EINER BRENNKRAFTMASCHINE ZUM ERKENNEN VON VERBRENNUNGSAUSSETZERN**
PROCESS FOR MONITORING THE RUNNING OF AN INTERNAL COMBUSTION ENGINE TO DETECT MISFIRING
PROCEDE DE SURVEILLANCE DU FONCTIONNEMENT D'UN MOTEUR A COMBUSTION INTERNE POUR DETECTER DES RATES DE COMBUSTION

(30) Priorität: 20.10.1994 DE 4437480
(43) Veröffentlichungstag der Anmeldung: 30.10.1996
(73) Patentinhaber: ROBERT BOSCH GMBH, 70442 Stuttgart (DE)
(72) Erfinder: SCHMIDT, Peter-Jürgen, D-71701 Schwieberdingen (DE); MEZGER, Manfred, D-71706 Markgröningen (DE); GOLLIN, Walter, D-71696 Möglingen (DE); LANGNER, Arnd-Matthias, D-70806 Kornwestheim (DE); RIES-MUELLER, Klaus, D-74906 Bad Rappenau (DE)
(86) Internationale Anmeldenummer: DE9501406
(87) Internationale Veröffentlichungsnummer: WO9612887

(56) Entgegenhaltungen:
- EP-A- 0 200 196
- WO-A-92/11522
- DE-A- 3 934 338
- DE-A- 4 035 957

## Beschreibung

### Stand der Technik

Die Erfindung geht aus von einem Verfahren zur Funktionsüberwachung einer Brennkraftmaschine zum Erkennen von Verbrennungsaussetzern nach der Gattung des Hauptanspruchs. Ein solches Verfahren ist bereits aus der DE-A-40 35 957 bzw. der korrespondierenden US-A-5 201 293 bekannt, bei welchem eine primärseitige Überwachung der Funkenbrennspannung und/oder der Funkendauer als Verfahren zur Zündaussetzererkennung mit einem Verfahren zur Laufunruhemessung als Verbrennungsaussetzererkennung derart kombiniert werden, daß in jedem Arbeitsbereich der Brennkraftmaschine mindestens eines der beiden Verfahren arbeitet und daß in denjenigen Arbeitsbereichen der Brennkraftmaschine, in denen eines der beiden Verfahren ungenaue Ergebnisse liefert, das ungenaue Ergebnis liefernde Verfahren ausgeblendet wird, mit der Folge, daß nur das jeweils andere Verfahren arbeitet. In den Fällen, in denen beide Verfahren arbeiten, können die Ergebnisse der verschiedenen Verfahren zur Verminderung des Risikos von falschen Überwachungsergebnissen in einer Plausibilitätsbetrachtung überprüft werden.

Die einzelnen Verfahren zur Funktionsüberwachung sind ebenfalls aus dem Stand der Technik bekannt, so ist beispielsweise aus der EP-A-0 344 349 bekannt, eine primärseitige Überwachung der Funkendauer vorzunehmen. Aus der US-A-4 691 288 ist das Verfahren der Laufunruheerkennung bekannt.

### Vorteile der Erfindung

Das erfindungsgemäße Verfahren mit den kennzeichnenden Merkmalen des Hauptanspruchs hat gegenüber dem bekannten den Vorteil, daß bei Brennkraftmaschinen mit zwei Zündkerzen pro Zylinder eine Zündaussetzererkennung an der ersten Zündkerze in einem Zylinder über das Laufunruhe-Verfahren überprüft wird, nachdem die andere zweite Zündkerze in diesem Zylinder abgeschaltet wurde.

Es ist somit mittels des gezielten Abschaltens die Diagnose einer Doppelzündung möglich. Damit ist insbesondere bei hohen Drehzahlen und Lasten eine sichere Erkennung von Verbrennungsaussetzern gegeben.

Durch die in den Unteransprüchen aufgeführten Maßnahmen sind vorteilhafte Weiterbildungen und Verbesserungen des im Hauptanspruch angegebenen Verfahrens möglich. So ist es beispielsweise vorteilhaft, nach einer erkannten Fehlfunktion an einer Zündkerze die Einspritzung in dem betreffenden Zylinder abzuschalten, um zu vermeiden, daß unverbranntes Gemisch in den Auspuff gelangt.

### Zeichnung

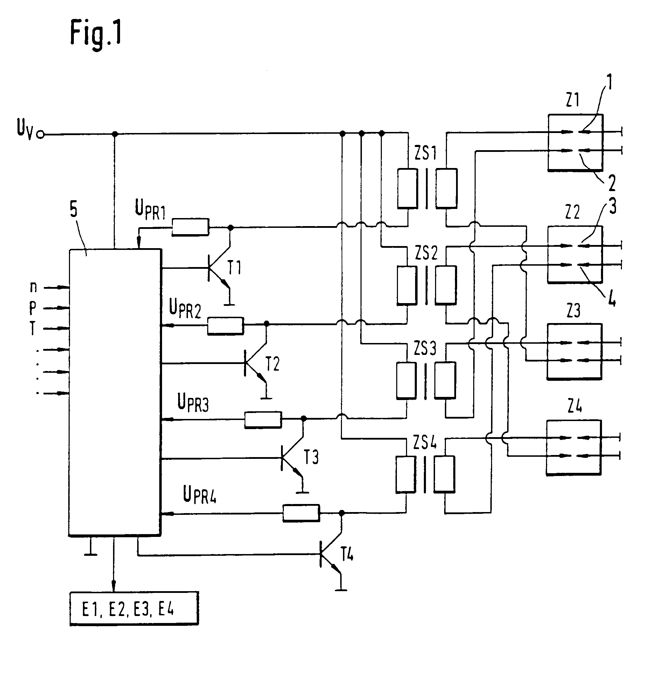

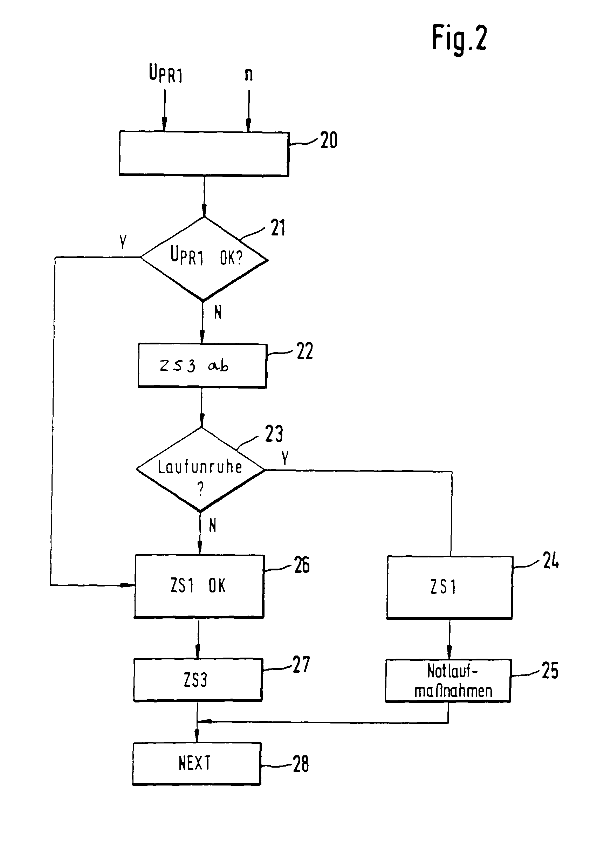

Ausführungsbeispiele der Erfindung sind in der Zeichnung dargestellt und in der nachfolgenden Beschreibung näher erläutert. Es zeigen Figur 1 ein Prinzipschaltbild einer Brennkraftmaschine mit Doppelfunkenspule zur Durchführung des erfindungsgemäßen Verfahrens und Figur 2 die Verfahrens-Schrittfolge zur erfindungsgemäßen Funktionsüberwachung.

### Beschreibung der Ausführungsbeispiele

Figur 1 zeigt den prinzipiellen Aufbau einer Brennkraftmaschine mit Doppelfunkenspule und der Erfassung der benötigten Größen für die erfindungsgemäße Funktionsüberwachung der Brennkraftmaschine. In Figur 1 ist hierzu der Einfachheit und Übersichtlichkeit halber eine Vierzylinder-Brennkraftmaschine dargestellt. Es sind aber durchaus auch Brennkraftmaschinen mit mehr Zylindern denkbar. Bei dieser Brennkraftmaschine sind vier Zündspulen ZSl, ZS2, ZS3, ZS4 vorgesehen, die jeweils aus einer Primärwicklung und einer Sekundärwicklung bestehen. Die Primärwicklung jeder Zündspule ist hierbei mit der Versorgungsspannung U_{V}, beispielsweise der Batterie der Brennkraftmaschine, verbunden. Die andere Seite der Primärwicklung ist jeweils über eine Transistorendstufe T1, T2, T3, T4 zur Ansteuerung des Stromflusses in den Primärwicklungen der Zündspulen ZS1, ZS2, ZS3, ZS4 mit Masse verbunden. Jedes Ende der Sekundärwicklung jeder Zündspule ist mit einer Zündkerze verbunden. Hierbei sind die Zündkerzen, die von einer Zündspule gespeist werden, in unterschiedlichen Zylindern derart montiert, daß diese Zylinder um 360 Grad kurbelwellenwinkelversetzt zueinander sich im Verdichtungshub befinden. Bei dem prinzipiellen Aufbau in Figur 1 sind somit die Zündkerzen 1 und 2 des Zylinders Z1 zum einen von der Zündspule ZS1 und zum anderen von der Zündspule ZS3 gespeist. Analog dazu werden die Zündkerzen 3 und 4 des Zylinders Z2 von den Zündspulen ZS2 und ZS4 gespeist. Die Endstufen T1 bis T4, die den Stromfluß in den Primärwicklungen der Zündspulen ein- und ausschalten, werden vom Steuergerät 5 angesteuert. Hierzu sind die Signale der nichtdargestellten Sensoren zur Erfassung der Betriebsparameter wie Drehzahl n, Druck p, Temperatur T und dergleichen an das Steuergerät 5 geführt. Dieses Steuergerät bestimmt aufgrund der erfaßten Betriebsparameter den Zündzeitpunkt und die Schließzeit für die einzelnen Zündspulen. In die Reihenschaltung aus Primärwicklung und Transitorendstufe ist jeweils ein Spannungsabgriff angebracht, so daß ein Signal, daß der auf die Primärseite transfirmierten Brennspannung entspricht, für jede Zündspule an das Steuergerät geführt ist. In dem Steuergerät erfolgt eine Auswertung der auf die Primärseite transfirmierten Brennspannung. Hierbei kann beispielsweise die Funkendauer erfaßt und mit vorgegebenen Werten verglichen werden. Eine andere Möglichkeit ist daß der Brennspannungsverlauf mit einem abgespeicherten Brennspannungsverlauf verglichen wird und bei Abweichung auf einen Fehler geschlossen wird. Das Steuergerät 5 steuert weiterhin die Einspritzventile El, E2, E3, E4 an, so daß die Einspritzung in den einzelnen Zylindern vom Steuergerät zylinderindividuell steuerbar ist.

Figur 2 zeigt die einzelnen Verfahrensschritte zur Durchführung des erfindungsgemäßen Verfahrens. Die einzelnen Verfahrensschritte sollen nun unter Zuhilfenahme der Figur 1 erläutert werden.

Im Steuergerät werden zunächst in einem Arbeitsschritt 20 die Größen für die Durchführung der Funktionsüberwachung erfaßt. Das heißt es wird die auf die Primärseite transfirmierte Brennspannung U_{PR} für den jeweiligen Zylinder, in welchem gerade eine Zündung stattgefunden hat, erfaßt und entsprechend mit vorgebbaren Werten verglichen. Gleichzeitig wird über einen Drehzahlsensor die Drehzahl der Brennkraftmaschine erfaßt. Für die Zündung im Zylinder 1 wird somit die Primärspannung U_{PR1} der den Brennspannungsverlauf an der Zündkerze 1 darstellt, erfaßt. In einer anschließenden Abfrage 21 wird, wie bereits dargelegt, dieser erfaßte Primärspannungsverlauf ausgewertet. Wurde hierbei eine fehlerhafte Brennspannung ermittelt, so führt der Nein-Ausgang der Abfrage 21 zum Arbeitsschritt 22, in welchem daraufhin die Zündspule 3, welche die zur Zündkerze 1 parallel geschaltete Zündkerze 2 im Zylinder 1 mit Hochspannung versorgt, abgeschaltet wird. Im Arbeitsschritt 22 ist dieses Abschalten mit dem Symbol der durchgestrichenen Bezeichnung Zündspule 3 ZS3 ausgeführt. Anschließend wird in einer Abfrage 23 überprüft, ob durch das Abschalten der Hochspannungsversorgung der Zündkerze 2 eine Laufunruhe nach einer erfolgten Zündung im Zylinder ZS1 ermittelt wird. Konnte in der Abfrage 23 eine Laufunruhe ermittelt werden, so wird im Arbeitsschritt 24, welcher mit dem Ja-Ausgang der Abfrage 23 verbunden ist, die Zündung in dem Zylinder ZS1 als fehlerhaft erkannt. Im Arbeitsschritt 25 werden dann Notlaufmaßnahmen wie beispielsweise das Abschalten der Einspritzung in dem Zylinder 1 ausgelöst. Konnte die Abfrage 23 mit Nein beantwortet werden, so wird im Arbeitsschritt 26 geschlußfolgert, daß die Zündung im Zylinder 1 in Ordnung war, was wiederum heißt, daß die Zündkerze 1 einen entsprechenden Funken zur Verfügung gestellt hat. Damit ist die ursprünglich in der Abfrage 21 ermittelte fehlerhafte Brennspannung an der Zündkerze 1 durch das Laufunruheverfahren nicht bestätigt worden und die Versorgung der Zündspule 3 kann im Arbeitsschritt 27 wieder eingeschaltet werden. Anschließend beginnt das Verfahren in einem Arbeitsschritt 28 durch das Rückspringen an den Anfang des Verfahrens von neuem.

## Patentansprüche

1. Verfahren zur Funktionsüberwachung einer Brennkraftmaschine zum Erkennen von Verbrennungsaussetzern, wobei ein Verfahren zur primärseitigen Überwachung der Funkenbrennspannung und/oder der Funkendauer und ein Verfahren zur Laufunruheerkennung integriert sind, dadurch gekennzeichnet, daß die Brennkraftmaschine pro Zylinder zwei Zündkerzen, die von unterschiedlichen Zündspulen mit Hochspannung versorgt werden, enthält und daß beim Erkennen eines Zündaussetzers durch Überwachung der Funkenbrennspannung und/oder der Funkendauer an der ersten Zündkerze in einem Zylinder im darauffolgenden Zündzyklus dieses Zylinders die Zündspule, die die zweite Zündkerze in diesem Zylinder versorgt, abgeschaltet wird, und die Laufunruhe-Überwachung aktiviert wird und daß bei einer erkannten Laufunruhe die Zündung der ersten Zündkerze als fehlerhaft erkannt wird.

2. Verfahren nach Anspruch 1, dadurch gekennzeichnet, daß bei einer fehlenden Laufunruheerkennung der Brennkraftmaschine die Zündung an der ersten Zündkerze als ordnungsgemäß erkannt wird.

3. Verfahren nach Anspruch 1 und 2, dadurch gekennzeichnet, daß bei einer fehlenden Zündung an einer Zündkerze die Zündung in diesem Zylinder durch Abschalten der Einspritzung und Abschalten der Zündspule unterbrochen wird.

## Claims

1. Method of monitoring the functioning of an internal combustion engine to detect combustion misfires, a method for primary-side monitoring of spark voltage drop and/or spark duration and a method for detecting running noise being integrated, characterized in that the internal combustion engine contains, for each cylinder, two spark plugs which are supplied with high voltage from different ignition coils, and in that, when a misfire is detected by monitoring the spark voltage drop and/or spark duration on the first spark plug in a cylinder, the ignition coil supplying the second spark plug in this cylinder is cut off in the subsequent ignition cycle of this cylinder and running noise monitoring is activated, and in that, when running noise is detected, the ignition of the first spark plug is recognized to be faulty.

2. Method according to Claim 1, characterized in that, in the absence of the detection of running noise in the internal combustion engine, ignition on the first spark plug is recognized to be in order.

3. Method according to Claims 1 and 2, characterized in that, in the absence of ignition on a spark plug, the ignition in this cylinder is interrupted by cutting off injection and cutting off the ignition coil.

## Revendications

1. Procédé servant à contrôler le fonctionnement d'un moteur à combustion interne pour détecter des ratés de combustion, dans lequel sont intégrés un procédé servant à contrôler du côté primaire la tension d'étincelle et/ou la durée de l'étincelle et un procédé pour détecter une irrégularité de la marche,
caractérisé en ce que
• le moteur à combustion interne contient deux bougies d'allumage par cylindre qui sont alimentées sous haute tension à partir de différentes bobines d'allumage et
• lors de la détection d'un raté d'allumage en contrôlant la tension d'étincelle et/ou la durée de l'étincelle sur la première bougie d'allumage dans un cylindre on débranche lors du cycle d'allumage qui suit de ce cylindre la bobine d'allumage, qui alimente la deuxième bougie d'allumage dans ce cylindre, et on active le contrôle d'irrégularité de la marche et
• en ce que dans le cas où l'on a détecté une irrégularité de la marche on identifie l'allumage de la première bougie d'allumage comme étant défectueux.

2. Procédé selon la revendication 1,
caractérisé en ce que
dans le cas d'une détection défectueuse de l'irrégularité de marche du moteur à combustion interne on identifie l'allumage sur la première bougie d'allumage comme étant en ordre.

3. Procédé selon la revendication 1 et la revendication 2,
caractérisé en ce que
dans le cas d'un allumage défectueux sur une bougie d'allumage on interrompt l'allumage dans ce cylindre en débranchant l'injection et en débranchant la bobine d'allumage.
